# EUROPEAN PATENT APPLICATION

(11) **EP 2 141 589 A1**
(43) Date of publication of application: **06.01.2010**
(21) Application number: 08159031.7
(22) Date of filing: 25.06.2008
(51) Int. Cl.: G06F 9/445, H04M 1/725

(54) **Electronic documents and methods for updating resource files for an application**

(71) Applicant: Research In Motion Limited, Waterloo, Ontario N2L 3W8 (CA)
(72) Inventor: O'Rourke, Connor Patrick, Kanata Ontario K2K 1L4 (CA); Tony, Salomone, Waterloo Ontario N2L 3W8 (CA)
(74) Representative: Rickard, David John

(57) **Abstract**

In one aspect, an electronic document for updating resource files for an application comprises logical names used by the application for referring to resource files and parameters for specifying constraints for the resource files. In another aspect, the electronic document comprises an application identifier identifying an application to which the electronic document corresponds, and a universal resource identifier identifying a resource file for use with the application.

## Description

The invention relates generally to software application development and, more particularly, to electronic documents and methods for updating resource files for an application.

Non-web-based mobile applications are known. These mobile applications are either pre-programmed onto a mobile device or a subscriber identity module ("SIM") card, or are delivered to the mobile device via a wired connection or over the air. Content associated with these mobile applications that represents music, images, game content, etc. is generally stored by the mobile device as resource files that are utilized during execution of the mobile applications.

When downloading non-web-based mobile applications, such as Java 2 Micro Edition ("J2ME") applications, to a mobile device, there is no opportunity for the user to exclude certain resource files (e.g., images, audio files) from being downloaded and installed on the mobile device. In some cases, however, it may not be desirable to download all of the resource files. Where storage on the mobile device is limited, downloading and storing all of the resource files for certain content can be a challenge. Further, where a mobile device does not have the capability to utilize certain types of resource files (such as, for example, certain sound file formats), per-kilobit download charges and limited storage on the mobile device can make it undesirable to download and store resource files that will not be used. An example of such a circumstance is where a user is downloading a game and wishes to download most of the resource files that are used to provide graphics and sound effects for the game, but does not wish to download any audio files that are used for background music for the game.

There currently does not exist a simple, standard way for application developers to generate information about the types of resource files that can be used by a developed application so that third-party content developers can create resource files that are compatible with the application (for example, for the purpose of creating game modifications to be downloaded over-the-air, or "OTA").

Having resource files separate from the main application binary is not a new concept. 32-bit versions of Microsoft Windows and the Windows.NET architecture allow for resource files and strings to be compiled into separate libraries or assemblies. The primary reason for resource file separation is application localization, which is used to support a more simplified application development and distribution process by allowing the main application code to remain unchanged while at the same time allowing developers to provide many different language/culture-specific resources.

The ability to isolate the core code from resource files is beneficial in the mobile realm, as many application developers distribute their applications by submitting them to carriers. Many carriers require the application to go through certification testing, and any change in the code may require a full re-certification of the application, not to mention a re-signing of the application before-hand in the case where applications may be accessing secure application programming interfaces ("APIs"). In some pricing schemes, re-signing an application results in additional expense.

In addition to localization, resource files distributed separate from applications can be used for customization purposes. One example of this is downloadable themes, which can be used to modify some of the graphical properties of a specific set of applications. Such customization, however, is generally limited to a pre-defined set of properties that can be applied to all applications, and currently involves only graphical customizations with no customization of application audio being supported. The notion of customization of applications can be an important one as some of the most popular applications are those that can be modified, or "modded", thus maintaining user interest with new content. Such modifications can breathe new life into an old application.

The examples mentioned above all require that resource files be compiled, usually into a single resource library that is of a file format similar to the application binary. Though the compiled resource library can improve load time efficiency, a major drawback to compiled resource libraries is that the resulting file obscures some of the details of the resource files contained in the resource library. As a result, the set of resource files in the library cannot be easily filtered in an effort to exclude unneeded or unwanted resource files. In order to alter the resource files included in such a resource library, the resource library must be decompiled, the resource files modified, and then the resource files re-compiled to form a replacement resource library. Modifying the compiled resource files in any way, however, can cause major problems if the application was digitally signed as any modification to the resource library could cause the mobile device to reject it.

Another side effect of the inability to filter compiled resource files is that if it is desired to use some resource files from one resource library and some resource files from another resource library with an application, then the two entire resource libraries must be downloaded, even though the functions served by the resource libraries may significally overlap. In addition to making filtering difficult, it is difficult to validate the content of the resource library at download time to see if it contains resource files that match the desired application. It is generally only determined at runtime whether resource files do not match the application by running into an application failure caused by invalid resource files (or by resource files expected to be present that are absent). When this occurs, the user must either download a different resource library, or rely on default fallback resource files in an effort to make the application usable, thus causing further time to be wasted and possibly incurring per-kilobyte data download charges.

### General

Accordingly, in one aspect there may be provided an electronic document for updating resource files for an application, comprising logical names used by said application for referring to said resource files; and parameters for specifying constraints for said resource files.

According to another aspect there may be provided an electronic document for updating resource files for an application, comprising: an application identifier identifying an application to which said electronic document corresponds; and a universal resource identifier identifying a resource file for use with said application.

According to still yet another aspect there may be provided a method for updating resource files for an application on a mobile device, comprising:
receiving a set of identifiers specifying resource files for use with said application; retrieving said resource files; and configuring said application to use said retrieved resource files.

According to yet another aspect there may be provided a method for updating resource files for an application, comprising: identifying resource files for use with said application in an electronic document; and publishing said electronic document.

### Brief Description of the Drawings

Embodiments will now be described more fully with reference to the accompanying drawings in which:

Figure 1 is a schematic diagram of a system for developing and distributing resource files;

Figure 2 is a schematic diagram of a mobile device used in the system of Figure 1 for executing an application;

Figure 3 is a flowchart of a method of developing and distributing mobile applications and resource files used by the system of Figure 1;

Figure 4 is a flowchart of the general method of downloading applications and resource files using the over-the-air model;

Figure 5 is a flowchart of the general method of downloading resource files in the system of Figure 1;

Figure 6 is a flowchart of the steps performed during setup of an application on a mobile device;

Figure 7 is a flowchart of the steps performed for initiating ERD implementation file discovery automatically after the ERD store entry has been created;

Figure 8 is a flowchart of the steps performed during obtaining and processing an ERD implementation file;

Figures 9A and 9B, in combination, illustrate a flowchart of the steps performed during validation, selection and downloading of resource files; and

Figure 10 is an exemplary option window for user selection of resource files to be downloaded.

### Description of Preferred Embodiments

Electronic documents and methods for updating resource files, such as for example image or audio files, for an application on a mobile device are disclosed herein. In one form, the electronic document comprises logical names used by the application for referring to the resource files and parameters for specifying constraints for the resource files. In another form, the electronic document comprises an application identifier for identifying the application to which the electronic document corresponds. A universal resource identifier identifies a resource file for use with the application. In one form, the method comprises receiving a set of identifiers specifying resource files for use with the application, retrieving the resource files and configuring the application to use the retrieved resource files. In another form, the method comprises identifying resource files for use with the application in an electronic document and publishing the electronic document. In contrast with the common practice of using static compiled resource libraries, the subject electronic documents and methods are intended to facilitate a more dynamic acquisition and use of content. This enables application users to manage which resource files in a provided set are downloaded to a mobile device and used by a target application running on the mobile device, thus giving the user greater control over the customization of their applications.

Along with providing a facility to customize applications, the electronic documents and methods also provide a way for application developers to generate information about the types of resource files that can be used by an application so that third party content developers can create resource files that are compatible with the application.

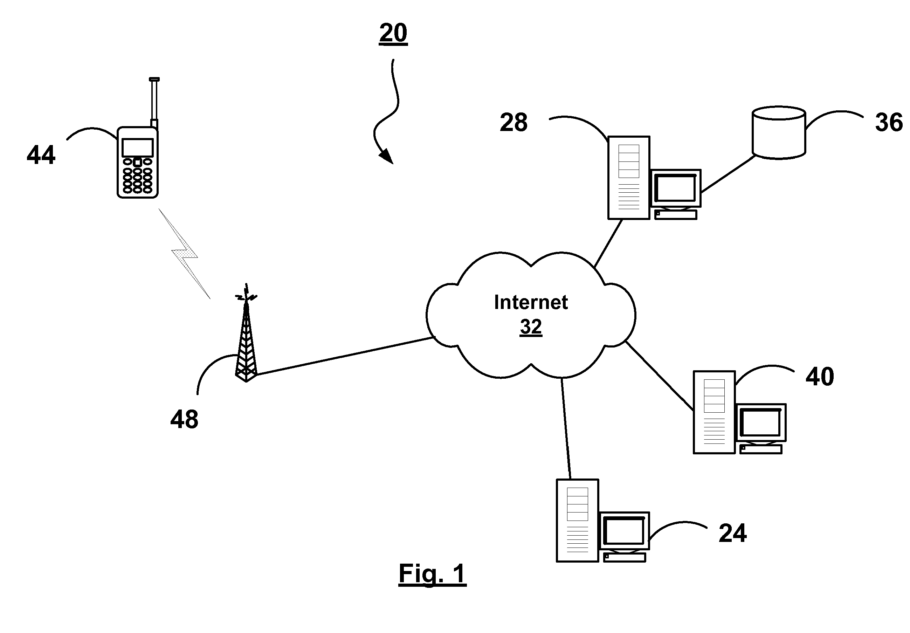

Turning now to Figure 1, a system 20 for the development and deployment of mobile applications and content therefor is shown. The components of the system 20 are the same as those typically used in J2ME over-the-air (OTA) application provisioning (i.e., the downloading and installation of a J2ME application). As can be seen, an application developer 24 is in communication with a mobile application portal 28 over the Internet 32. The application developer 24 develops applications to be distributed to one or more mobile devices 44. The mobile application portal 28 controls access to applications and resource files developed by the application developer 24 that are stored in an application store 36, and provides billing operations. A content developer 40 is also in communication with the mobile application portal 28 over the Internet 32. The content developer 40 develops resource files that supplement applications developed by the application developer 24. The resource files are also stored in the application store 36 of the mobile application portal 28. The mobile device 44 is in communication wirelessly with a cellular antenna 48. Communications between the cellular antenna 48 and the Internet 32 are bridged via one or more gateways/proxies (not shown). Although system 20 is shown as comprising a single application developer 24, a single content developer 40 and a single mobile device 44, those of skill in the art will appreciate that this is for ease of illustration only. System 20 may comprise multiple application developers 24, multiple content developers 40 and/or multiple mobile devices 44.

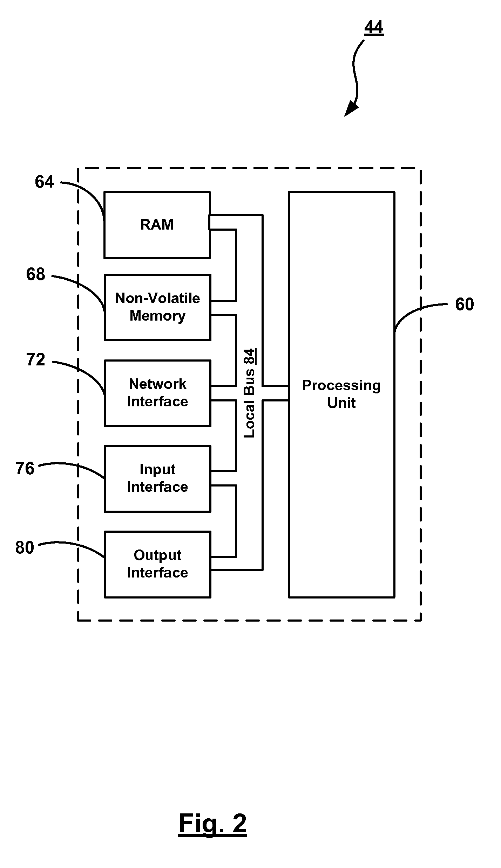

Turning now to Figure 2, schematic diagram of the mobile device 44 is shown. The mobile device 44 executes an application developed by the application developer 24 and comprises a processing unit 60 in communication with volatile random access memory ("RAM") 64, non-volatile memory 68, a network interface 72, an input interface 76 and an output interface 80 over a local bus 84. In this embodiment, the mobile device 44 is a mobile cellular telephone. The processing unit 60 is a low-power-consumption processor, such as an Intel ARM processor, and the RAM 64 and non-volatile memory 68 are limited in size. The network interface 72 is a cellular communications module. The input interface 76 comprises a QWERTY thumb keyboard and a thumb wheel. The output interface 80 comprises a color display that is 284 by 284 pixels in size.

The mobile device 44 executes an operating system ("OS") and a Java Virtual Machine ("JVM") that provides an application execution environment. In particular, the version of Java supported by the JVM is J2ME. The JVM converts applications into OS-specific commands. In addition to governing the execution of applications, the JVM handles related tasks such as managing the memory of the mobile device 44, providing security against malicious code, and managing multiple threads of program execution. Further, the OS of the mobile device 44 includes OTA downloading software.

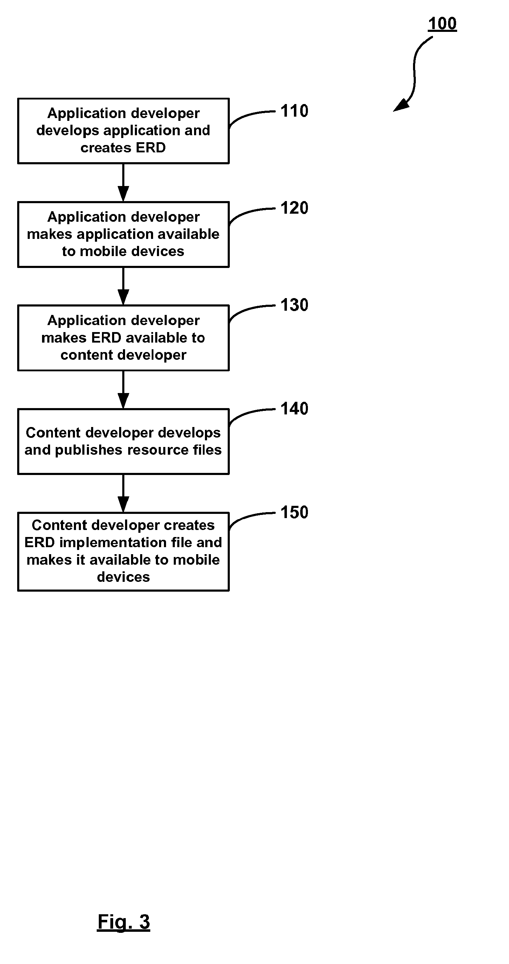

Figure 3 illustrates the general method 100 of application development and deployment using the system 20. An application developer, such as application developer 24, develops an application for mobile devices 44 and creates an "External Resource Definition" ("ERD") that describes resource file types, constraints and/or properties that are used by the developed application (step 110). The application developer 24 then makes the application available to the mobile devices 44 for downloading (step 120). The application developer also makes the ERD available to one or more content developers, such as content developer 40 (step 130). The content developer 40 uses the information contained within the ERD to develop resource files that are compatible with the application and publishes them (step 140). The content developer 40 then creates an ERD implementation file that references (i.e. contains links to) the published resource files and makes the ERD implementation file available to the mobile devices 44 for downloading (step 150).

"External resource" refers to resource files, such as images or audio, that are not included in the application executable. The ERD is a descriptor file that contains information used to describe required or recommended properties of resource files that are used by an application. The ERD created by the application developer 24 at step 110 not only provides guidelines for content development, but also specifies how essential the presence of a particular resource file is to the application's functionality. That is, the information in the ERD can be used to determine whether certain resource files are integral to the functionality of the application or whether they are merely added extras. In particular, the ERD comprises a "presence required" (PR) attribute for each referred resource file. If the PR attribute is set to "true", the associated resource file is integral to the functionality of the application. If the PR attribute is "false", the associated resource file is an added extra.

The application developer 24 can create ERDs for their applications to expose such information so that resource files used by the application can be updated and/or filtered out. More specifically, the ERD is an extensible markup language ("XML") schema file containing a mapping of logical names to resource file types. The purpose of specifying logical names in the ERD is so that application code can make reference to these names instead of directly referencing the resource file names themselves, similar to how logical names are specified for strings in Java resource bundles. The ability to reference the logical name is key in providing the ability for applications to use different resource files that serve the same purpose.

The resource file types comprise information describing constraints for any resource file that is to be associated with the logical name. These constraints can include for example constraints specific to resource file type, general constraints and optional "hints". Resource file type specific constraints may specify how the associated resource file is to be recognized and its format. For example, constraints for an image resource type with a logical name of CHARACTER_IMAGE may specify that the image be recognized as an image file of type DIB, jpeg, etc. and that the image have a specific aspect ratio. A more general constraint that can be applied to all resource types is a "mandatory resource presence" constraint that indicates that whenever the application tries to load a resource file given the logical name, and there is no resource file that is associated with that logical name present on the mobile device 44 that it should throw an exception. An example where one would want to make the resource file presence mandatory would be for graphic images in an application that relies heavily on presentation. If this constraint has not been applied, then the presence of a corresponding resource file is optional and there will be no exception. Optional hints may for example identify that an audio resource file is loopable (i.e., transitions smoothly from the end of the playback of one loop to the start of the next).

The logical name-resource type pairs are organized into groups, which also have logical names so that an entire group can be referenced in application code. A group of logical name-resource type pairs can comprise subgroups as well. Any groupings may also be useful for presenting a choice to the mobile device user as to which resource files they want to download; i.e., they could choose to download or exclude entire groups rather than selecting each resource file individually.

As the ERD is an XML schema, it uses an absolute universal resource identifier ("URI") that can be used to distinguish the ERD from ERDs associated with other applications, and to distinguish different versions of an ERD (different application builds may require different resource files, and therefore ERDs associated with different versions of the same application). Having information to distinguish between ERDs helps prevent attempts to download resource files that will not work with the particular application version installed on a mobile device.

To illustrate how ERD information can be organized in an XML schema file, an exemplary ERD created for a simple application is shown in Appendix A. The ERD is generated using a development tool in an effort to reduce the complexity of application development. The ERD in this application represents content for a video game set in outer space and named "SpaceGame". Third-party content developers can provide different images to represent a spaceship, and can also provide alternate theme songs for the video game.

In the exemplary ERD of Appendix A, a unique absolute URI for the XML schema has been specified by the application developer on line (1). The unique absolute URI permits distinction between ERDs. On line (2), a *VendorName* element is defined. This element represents the name of the application or content developer. The value for this element is included in the XML schema implementation so that it can be used later on when downloaded files are saved to persistent store. Two resource file logical names, *audio.THEMESONG* and *graphics.SPACESHIP,* are specified on lines (3) and (6). These two resource file logical names are what the application code refers to when associated resource files are loaded from persistent store. The use of a '.' in the logical names indicates that these resource files are part of a group. The left side of each logical name identifies the group name (e.g. audio, graphics) and the right side of each logical name identifiers the resource file type. In addition, lines (3) and (6) specify that the number of occurrences of the resource file logical names is unbounded. This means that an ERD implementation file created by a content developer 40 can specify the location of many different resource files that are meant to serve the same purpose in the application in order to give the clients who download the ERD implementation file a choice from a set. Resource file definitions inherit from a simple base type that defines attributes (for example the URI attribute that is used to specify the location of a resource file). In this exemplary ERD, hints and constraints are included as element annotations.

Having the ERD as an XML schema file facilitates its publishing on a website so that content developers 40 can download it and use it for the development of additional resource files for the associated application. Content developers are able to use published ERD to create ERD implementation files that reference (contain links to) their developed resource files, and are typically able to do so using an XML editor of their choice.

A simple API is made available to the application developer 24 so that the application developer can load any external resource files by referencing the logical name they assigned to the resource file type in the ERD they created for their application. Appendix B comprises a portion of pseudo-code for a MIDlet version of the SpaceGame example that uses a simple call to a routine that returns a resource file in the form of a byte array. As mentioned above, there are cases where the presence of a resource file is not mandatory according to the constraints defined in the ERD. As a result, the pseudo-code checks for values returned from the API to ensure that the application will only attempt to use resource files that are present

The creation of external content definitions is done during the application development phase. The application developer 24 specifies through use of a dialog/editor in the integrated development environment (IDE), a mapping of logical names to resource types. Groups are specified for resource files at this time. To specify the group organization, a directory tree-like component is used. Constraint information for known constraint types is specified. For example, dialogs for certain constraint types such as graphics constraints are made available in the IDE by default. Constraint information is automatically extracted using an existing resource file as a template, such as for example, one of the resource files contained in the application Java archive, or "JAR".

In order to make the application available to mobile devices 44 at step 120, the application developer 24 publishes the application to the mobile application portal 28. The mobile application portal 28 includes a system for uploading files and registering them in the application store 36 so that they can be made available for download as links on a web page. The application developer 24 makes the ERD available to content developers 40 at step 130 in a similar manner.

During development and publication of resource files for the application at step 140, the content developer 40 uses the information in the published ERD to determine the parameters that must exist in order for resource files to be compatible with the application. Once the resource files have been generated, the content developer 40 makes them publicly available by uploading and registering them with the mobile application portal 28.

During creation and publication of the ERD implementation file at step 150, the content developer 40 provides references to the published content and the application to which it is associated so that mobile devices 44 can download and make use of the content in the manner envisioned by the content developer 40.

The ERD implementation file uses universal resource locator (URL) links to tie together a set of independent resource files generated at step 140 into a single organized set. Using an XML file that contains URL links to resource files, overcomes the problem associated with compiled resource libraries regarding filtering, as XML can be easily read, massaged, or manipulated so that specific resource files can be excluded. Using an ERD implementation file makes resource file acquisition and use more dynamic in that (i) various resource files can be filtered out before downloading, (ii) resource files that were previously filtered can be downloaded at a later time, and (iii) individual resource files e.g., resource files that have been updated by a content developer 40 and registered with the mobile application portal 28, can be downloaded. In addition, as XML is easily legible, simpler resource file validation code that make use of the many pre-existing XML processing code libraries can be developed.

An exemplary ERD implementation file created by the content developer 40 corresponding to the SpaceGame ERD of Appendix A is shown in Appendix C. As can be seen, there are two files associated with the audio.THEMESONG logical name in the ERD implementation file. In this case, the content developer 40 has provided two different file types for the audio in order to support mobile devices 44 with differing audio capabilities.

There are a variety of available development tools that use the information contained within an XML schema to assist the developer of an XML implementation file by ensuring that valid elements and values following the rules of the particular XML schema are used. Some tools such as Microsoft Visual Studio.NET and Stylus Studio comprise a code auto-complete mechanism. Other tools such as Xample and XUlEditor can take an XML schema and generate a graphical user interface (GUI) that can be used to gather input values from the content developer 40 that will be included in a resulting XML implementation file.

Once the content developer 40 has used an ERD to develop an ERD implementation file that references resource files they have created, the content developer 40 makes the ERD implementation file available for download by the mobile device 44 that has the associated application via the mobile application portal 28. The user of the mobile device 44 then can choose which resource files get downloaded to the mobile device 44 and used by the application. Content downloads may involve a combination of different ERD implementation files in order to expand the set of resource files to choose from.

The steps for acquiring resource files are similar to the component interaction specified in the OTA provisioning specification. The OTA provisioning specification, which is a part of the Mobile Information Device Profile ("MIDP") 2.0 specification, describes a way for deploying J2ME applications over the air that involves downloading the application via Hypertext Transfer Protocol ("HTTP"). Part of the method described herein involves extending the OTA downloading capabilities of mobile devices 44 to include download management for a variety of resource file types, not just applications.

The OTA "pull" model permits explicit user confirmation of downloads so that users can choose to proceed with any application or content downloads that may cost them money or use up mobile device resources. OTA systems also provide some standard validation mechanisms to ensure that downloaded files have not been corrupted.

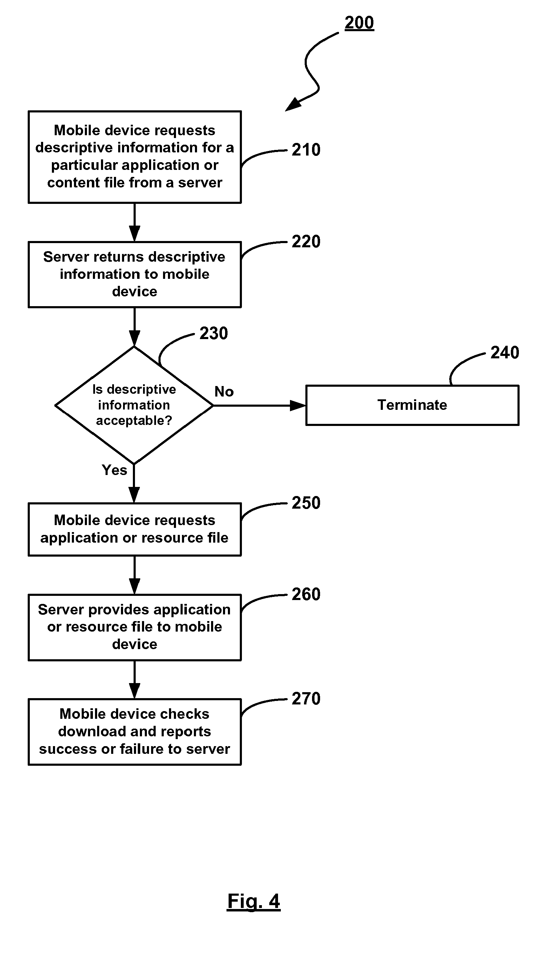

Figure 4 illustrates the protocol of information exchange in OTA downloading. The mobile device 44 browses a website having a list of applications and upon selection by a user, requests descriptive information about the particular application or content file from a server (step 210). In response to a request, the server returns descriptive information to the mobile device 44 (step 220). The descriptive information is then examined to determine if it is acceptable by both the mobile device 44 and the user of the mobile device (by way of displaying descriptive information and prompting for download confirmation) (step 230). If the descriptive information is deemed unacceptable at step 230, the downloading of the application or resource file terminates (step 240). If the descriptive information is deemed acceptable at step 230, the mobile device 44 requests the application or resource file (step 250). The server in response to the request, returns the application or resource file to the mobile device 44 (step 260). The OTA download management system of the mobile device 44 then performs some basic checks to ensure that the download operation was successful, and the success or failure of the download operation is reported to the server over HTTP using an OTA status code (step 270).

In contrast to the OTA downloading mode, the system 20 allows information about resource files to be pushed to the mobile device 44 from the server. In this manner, users can register for notifications of newly available application resource files and download them right away if desired, without having to navigate to a specific website. It is desirable to allow the user the final say in whether new resource files that are to be used by a specific application get downloaded to the mobile device 44, as adding or updating application resource files will essentially change the application itself as perceived by the user, not to mention that some more detailed resource files can take up significant resources.

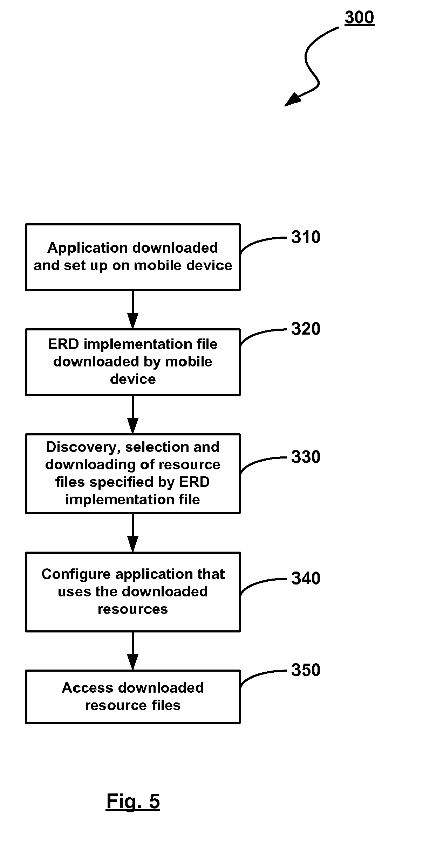

Figure 5 shows the method of acquiring and making use of external resources generally at 300. In addition to the standard OTA validation mechanisms used in the download process, a more involved validation process is used by system 20 when downloading resource files that are meant to be compatible with a specific application. The additional validation is done through comparing a set of pre-defined constraints for application resource files contained in the ERD to information about those resource files extracted by reading and parsing the actual resource files.

When an application that makes use of an ERD is downloaded and set up on the mobile device 44 (step 310) and an ERD implementation file is obtained by the mobile device 44 (step 320), resource files specified by the ERD implementation file are presented to the user of the mobile device 44 for selection. Once resource files have been selected by the user of the mobile device 44 (step 330), the selected resource files are downloaded and stored on the mobile device 44 (step 340). The application that uses the downloaded resource files is configured (step 350) and the downloaded resource files are accessed from within the application (step 360).

An application that employs ERDs to define external resource files requires additional application descriptor attributes and additional processing when installing the OTA-downloaded application. The additional application descriptor attributes comprise an ERD-FILE attribute and an ERD-URL attribute. The ERD-FILE attribute is the name of a file within the application executable that represents the ERD for the application. This attribute is required in instances where the ERD is a part of the application executable. The ERD-URL attribute is the HTTP URL for the remote location of the ERD file. This attribute is required in instances where the ERD is not a part of the application executable itself.

The additional processing required upon installing the application involves extracting and storing information in an ERD store (or ERD cache). The ERD store is a list of entries in non-volatile memory 68 of the mobile device 44. Each entry represents the necessary information to associate the installed application with an ERD and permits association of an ERD implementation file with an application. A single entry in the ERD store contains an absolute URI identifying the ERD, the name of the application that is associated with the particular ERD and the ERD itself, in the case where the ERD is not already present in the application executable. The URI of XML files are used to distinguish a specific kind of XML file from other XML files. Whenever an ERD implementation file is found to reference the particular URI when listing which XML schema it implements, it is understood that the ERD implementation file is meant for use with the application the particular entry is associated with. Each ERD implementation file is required to list its target URI.

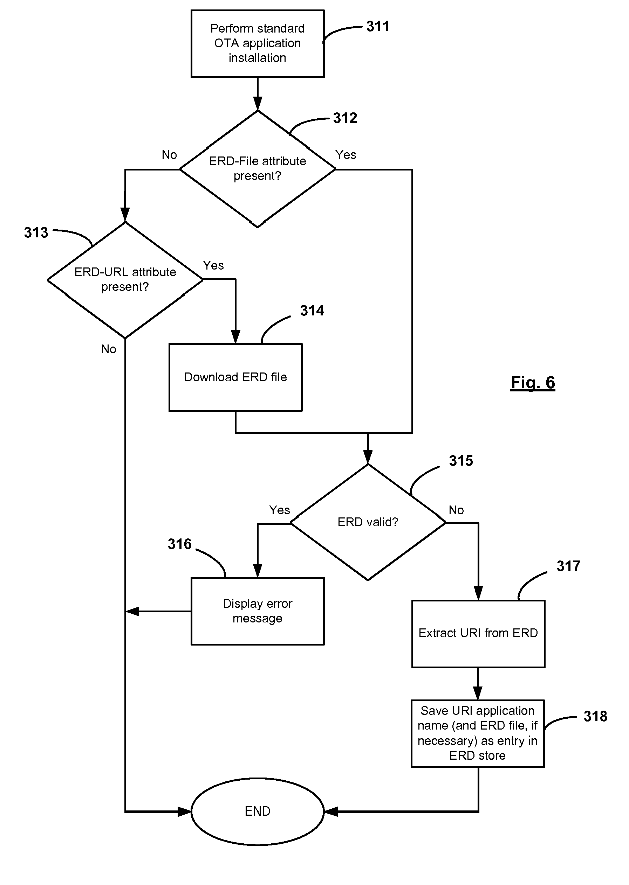

Figure 6 shows the steps performed during the downloading and setting up of an application on the mobile device 44. A standard OTA application installation is performed on the mobile device 44 (step 311). A reference to the name of the application is maintained. It is then determined whether the ERD-FILE attribute is present (step 312). If the ERD-FILE attribute is not present at step 312, it is then determined whether the ERD-URL attribute is present (step 313). If at step 313, it is determined that the ERD-URL attribute is not present, the application installation terminates. If, instead, the ERD-URL attribute is present, the ERD is downloaded from the location specified by the ERD-URL (step 314). Once the ERD has been downloaded or if at step 312, it is determined that the ERD-File attribute is present, it is determined whether the ERD is valid (step 315). If the ERD is invalid, an error message is displayed (step 316), after which the application setup process ends. If, instead, the ERD is found to be valid, URI information is extracted from the ERD (step 317). The URI information extracted from the ERD and the name of the application determined at step 311 are stored, along with the ERD if it was retrieved at step 314 (step 318).

The ERD implementation file is obtained via a reference. This reference takes the form of a web page link that points to the ERD implementation file or an URL for the file listed as an attribute in a specific application's metadata (e.g., an attribute inside a J2ME application's Java archive or manifest). Alternatively, the ERD implementation file may be contained within the application executable itself. For example, a list of registered ERD implementation files can be provided on a web page on the mobile application portal 28.

In the case where the application is started directly by the user of the mobile device 44, the application first looks to locate the ERD implementation file in the application executable. If the ERD implementation file does not exist, the application then looks for the URL listed as an attribute in the metadata of the application.

To indicate that the application has a pre-defined default ERD implementation file, some additional application descriptor attributes are employed. The attributes comprise a DEFAULT_ERD_IMPL_URL attribute and a DEFAULT_ERD_IMPL_FILE attribute. The DEFAULT_ERD_IMPL_URL attribute is an HTTP URL for the remote location of the default ERD implementation file. This attribute is required in instances where the default ERD implementation file is not a part of the application executable itself. The DEFAULT_ERD_IMPL_FILE attribute is the name of a file within the application executable that represents the default ERD implementation file for the application. This attribute is required in instances where the default ERD implementation file is a part of the application executable.

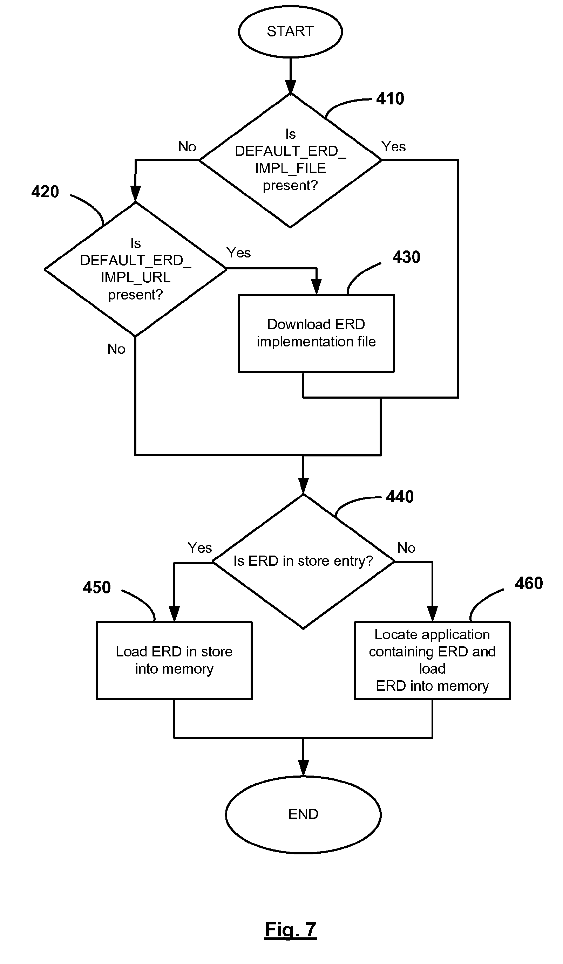

Figure 7 shows the process for initiating ERD implementation file discovery automatically after the ERD store entry has been created. Initially, it is determined whether the DEFAULT_ERD_IMPL_FILE attribute is present in the ERD store entry (step 410). If this attribute is not present in the ERD store entry, it is determined whether the DEFAULT_ERD_IMPL_URL attribute is present (step 420). If the DEFAUL_T_ERD_IMPL_URL attribute is absent at step 420, the discovery process ends. If, instead, the DEFAUL_T_ERD_IMPL_URL attribute is found at step 420, the ERD implementation file is downloaded from the location specified (step 430). It is then determined if the ERD associated with the ERD implementation file is present in the ERD store entry (step 440). If it is, the ERD is loaded from the ERD store entry into memory (step 450). If the ERD is not present in the ERD store entry, the application containing the ERD is located using the "application name" attribute in the ERD store entry and the ERD is loaded into memory (step 460). Alternatively, the user of the mobile device 44 can opt to download and use content by independently obtaining an ERD implementation file.

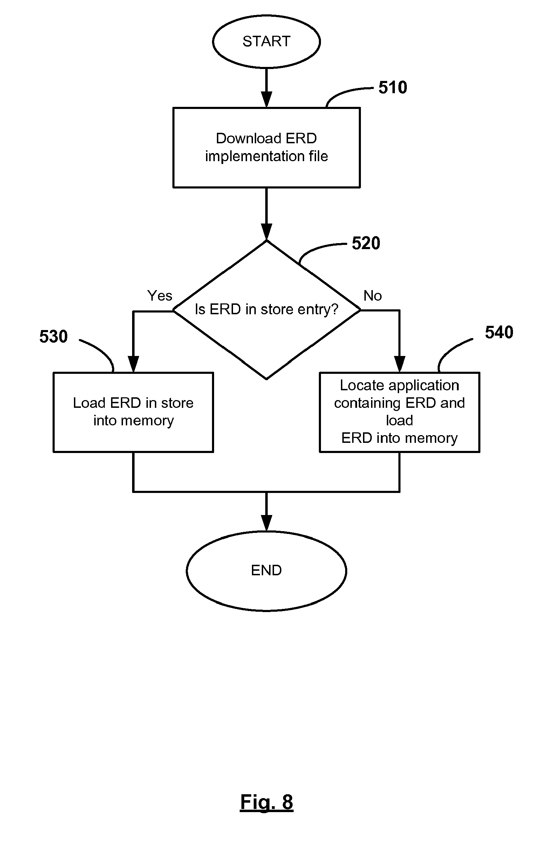

Figure 8 illustrates the steps performed during independently obtaining and processing an ERD implementation file. The user of the mobile device 44 downloads an ERD implementation file (step 510). In particular, the user can browse or type in the URL for a desired content set presented on the webpage operated by the mobile application portal 28. The URL for the particular content set, links to the ERD implementation file for that content set. By clicking on the URL or otherwise selecting the particular content set, the user directs the mobile device 44 to obtain the ERD implementation file using a HTTP URL link. The name of the ERD implementation file is associated with a MIME type specific to ERD implementation files (for example, application/vnd.rim.erd_impl). When the browser sees that the file is an ERD implementation file, it downloads the file and passes it off to the content-handler code for ERD implementation files.

The mobile device 44 then determines if the corresponding ERD is in the ERD store entry (step 520). The content-handler code searches for the tag in the ERD implementation file that identifies the URI of the ERD that this document implements (usually specified through a schemaLocation attribute or through the default namespace of the document elements). If the URI for the application specified in the ERD implementation file is located in the ERD store, the ERD is loaded from the ERD store into memory (step 530). If, instead, the URI for the application specified in the ERD implementation file is not located in the ERD store, the application containing the ERD is located using the "application name" attribute in the ERD store entry and the ERD is loaded into memory (step 540). At this point, the application that contains the ERD is downloaded using the URI specified in the ERD implementation file if the application is not present on the mobile device 44. The ERD is then extracted from the application executable and loaded into memory. Once the ERD implementation file and the corresponding ERD are obtained, the process of validating and processing the ERD implementation file commences.

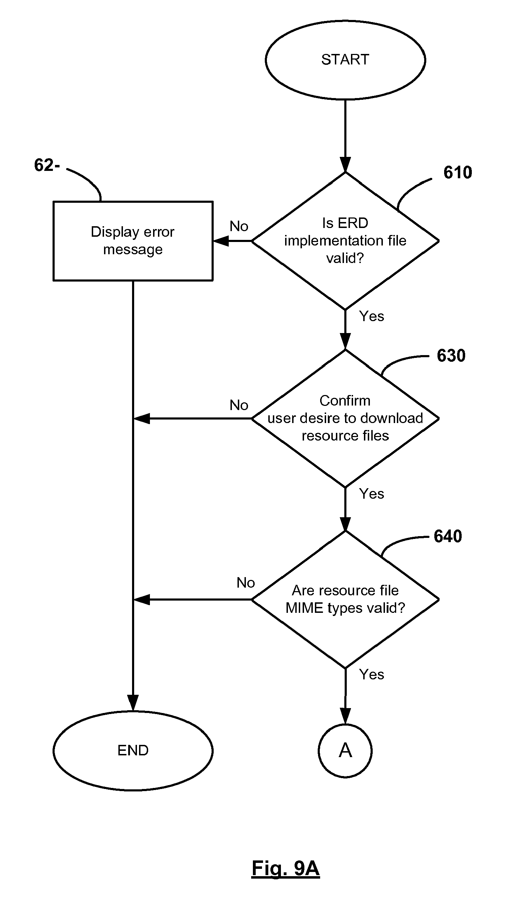

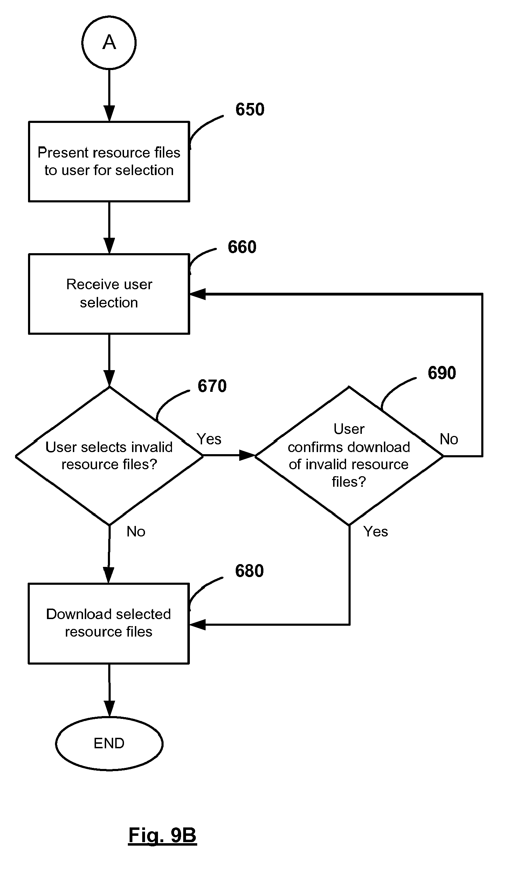

Figures 9A and 9B, collectively, show the steps performed during validation and processing of the ERD implementation file. Once the ERD is loaded into memory, it is determined whether the ERD implementation file is valid (step 610). This is done by comparing the parameters set out in the ERD to the ERD implementation file. If the ERD implementation file is found to be invalid as a result of the ERD implementation file containing elements that are not defined by the ERD to which it corresponds, an error message is displayed (step 620) after which processing of the ERD implementation file ends. If, instead, the ERD implementation file is found to be valid, the user is presented with a prompt asking the user whether they desire to start resource file downloading now (step 630). For example, the user may be presented with the following message: "Resource files are available for the application SpaceGame. Would you like to start downloading resource files?". The user can then opt to start or terminate the resource file downloading process by selecting a "Yes" or a "No" button respectively. If the user selects to terminate the resource file downloading process, the processing of the ERD implementation file terminates.

If the user opts to start the resource file downloading process, it is determined whether the MIME type for each resource file specified in the ERD implementation file is valid (step 640). The MIME types of the resource files referenced in the ERD implementation file are checked first to see if the MIME type matches one in a set of types representing information types that are recognized and can be used by the mobile device 44. This validation is done in advance of presenting the resource file selection screen so that any resource files that are not usable on the mobile device 44 (e.g., mp3) can be flagged as incompatible.

Once the list of resource files that are valid have been determined, the list is presented to the user for selection of resource files to download (step 650).

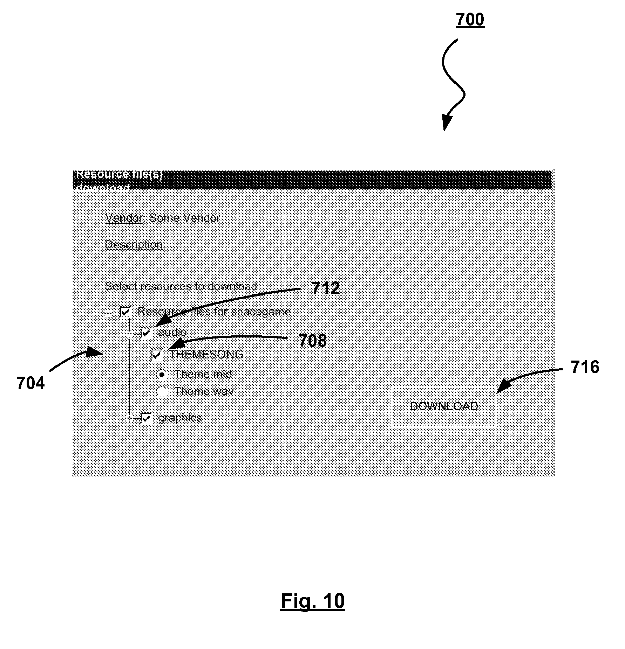

Figure 10 shows such a screen 700 for the SpaceGame example. The screen 700 contains a collapsible/expandable directory-tree 704 that is used to display the resource files available to download organized according to the groupings of logical name-resource type pairs in the ERD. Stylesheets can be incorporated into the viewing process in order to organize the list of resource files in a different way for the user. If the example ERD format is used, the logical names in the ERD are parsed to divide strings separated by '.' and the values are used to form the corresponding tree hierarchy. In the directory-tree 704, resource files that were flagged as incompatible in the previous step are brought to the user's attention by way of a visual indicator (e.g. an icon beside the displayed resource file name). The resource files presented on the screen 700 are all compatible and, as a result, there are no such icons shown.

User selection of the resource files to be downloaded is then received (step 660). The user can choose the resource files to be downloaded by clicking checkboxes 708, where a checked checkbox 708 indicates a resource file that is to be downloaded in this session. The groupings of resource files have checkboxes 712 as well in order to make it simpler for the user to select an entire group of resource files for download. Once the user has finished selecting the resource files to be downloaded, the user can start the download process by selecting a "download" button 716.

When the download process commences, it is determined whether the user has selected invalid resource files (step 670). If the user has not selected any invalid resource files for downloading, the selected resource files are downloaded (step 680). If the user has selected one or more invalid resource files for downloading, the user is asked to confirm that the selected resource files are to be downloaded (step 690). In this case, a dialog is presented to the user to advise that one or more of the selected resource file(s) may not be usable and a confirmation to proceed with the download is requested. If the user elects not to proceed with downloading the selected invalid resource file(s), the resource files are presented again to the user for selection at step 660. If, instead, the user elects to download the selected resource file(s) selected, the selected resource file(s) are downloaded at step 680.

Each type of constraint that is specified in an ERD, such as the basicGraphicsConstraints constraint type found on line (6) in the sample ERD of Appendix A, has an associated constraint validator object present on the mobile device 44. If constraints are present in the ERD for one of the resource types associated with a resource file that is specified by the user to be downloaded, the application attempts to locate the associated validator object. If a registered validator object for the constraint type cannot be located, the user is alerted and asked if they wish to proceed with the download.

Assuming a validator object was found or the user has decided to proceed regardless, the resource files chosen by the user are downloaded from the URLs specified in the ERD implementation file. Before any of these files are committed to persistent store, the files are verified by their associated validator objects, if any, to see if the properties of the resource file fit within the constraint values specified in the ERD. If a validator object reports that a particular file has failed to fit within the specified constraints, this is reported to the user who is then prompted to select (i) whether the entire resource file downloading operation is to be cancelled, (ii) the particular resource file download operation is to be cancelled, or (iii) the resource file download operation is to be performed even though it failed evaluation.

If there is at least one resource file that has either passed validation or has been cleared manually by the user, the location where this resource file will be stored in persistent memory is determined such that it can be identified and retrieved when the target application wishes to load it for use. If the persistent store in which the resource files are to be saved is a directory-based file system, then a directory that has the same name as the application is created and all downloaded files for the application are stored in that directory. It may be the case that a user may wish to download resource files from different vendors that serve the same purpose. In this case, the user has the option of switching which resource files get used by the application without having to delete the files used previously. To allow this, subdirectories used to organize resource files are specific to a particular vendor. The names of the directories are based on the VendorName element specified in the ERD implementation file used in the downloading of those resource files. Each vendor-specific subdirectory will then contain a set of directories that mimic the groupings of resource file types that is contained in the associated ERD. Appendix D is an example of the total directory structure for downloaded resource files using the SpaceGame application example.

When there are multiple resource files from multiple vendors that can be used for the same purpose within an application, a configuration file is used to specify which of the total set of resource files for the application in the persistent store will be used. The configuration file resides in the root resource file directory of the application, and when the application is run and attempts to load a resource file by referring to its logical name, resource file management code on the mobile device 44 looks for the root directory of the application and loads the configuration file in that directory to find the location of the resource files. Appendix E is an example of the total directory structure for downloaded resource files using the SpaceGame application example, with the configuration file for the application present.

It is convenient to have the format of the configuration file the same as the format for the resource file section of the ERD implementation file. An example of such a configuration file for the SpaceGame application example is shown in Appendix F.

After resource files have been downloaded, a configuration management application is launched. The configuration management application prompts the user as to select whether they wish to make the newly downloaded files part of the current application configuration. If the user agrees, the configuration file is created if it does not already exist, and the values of the URL elements are set so that they reference the location of the downloaded resource files in the file system as specified by the user.

While the above embodiment has been described with specificity to XML, those of skill in the art will appreciate other formats for the ERD and ERD implementation files can be employed. Further, it can be desirable to compress the ERD and ERD implementation file in some cases. Also, although reference has been made specifically to the J2ME platform to illustrate how the method can be incorporated into a pre-existing architecture, those skilled in the art will appreciate that other platforms are suitable.

If desired, the application developer 24 can specify that certain resource files contained within the application executable or elsewhere should be used as a fallback in cases where the user has moved out of coverage and cannot download any external resource files, or where the resource files are otherwise unavailable or corrupted.

The validation of resource files can be done on a proxy server. In this manner, the downloading of invalid resource files directly to the mobile device and their subsequent rejection can be prevented, thereby reducing waste of network data transfer usage of the mobile device. Resource filtering can also be performed on the proxy server, with option screens being generated as web pages or the like.

Resource files for use with a particular application that have been pre-certified by a carrier or the like can be made available to mobile devices. Where pre-certified resource files are employed, validation of the resource files can be skipped.

The user can also be permitted to configure resource files used by an application using an option screen.

Although embodiments have been described above with particular reference to the drawings, those of skill in the art will appreciate that alterations and modifications may be effected thereto, without departing from the spirit and scope thereof as defined by the claims appended hereto.

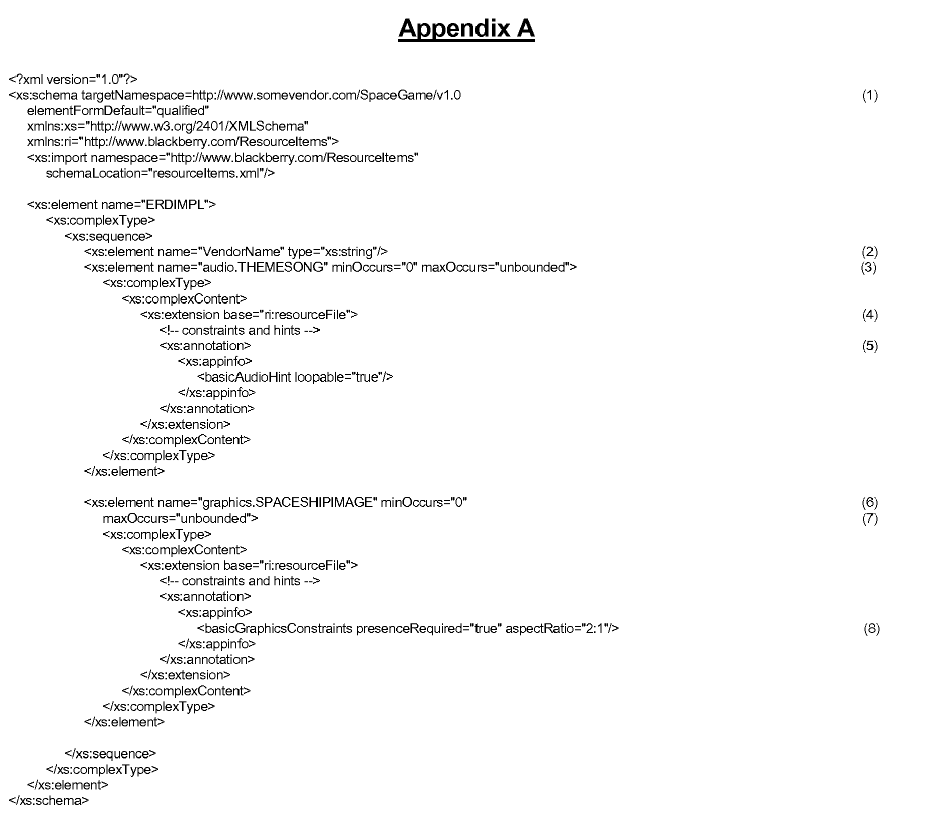

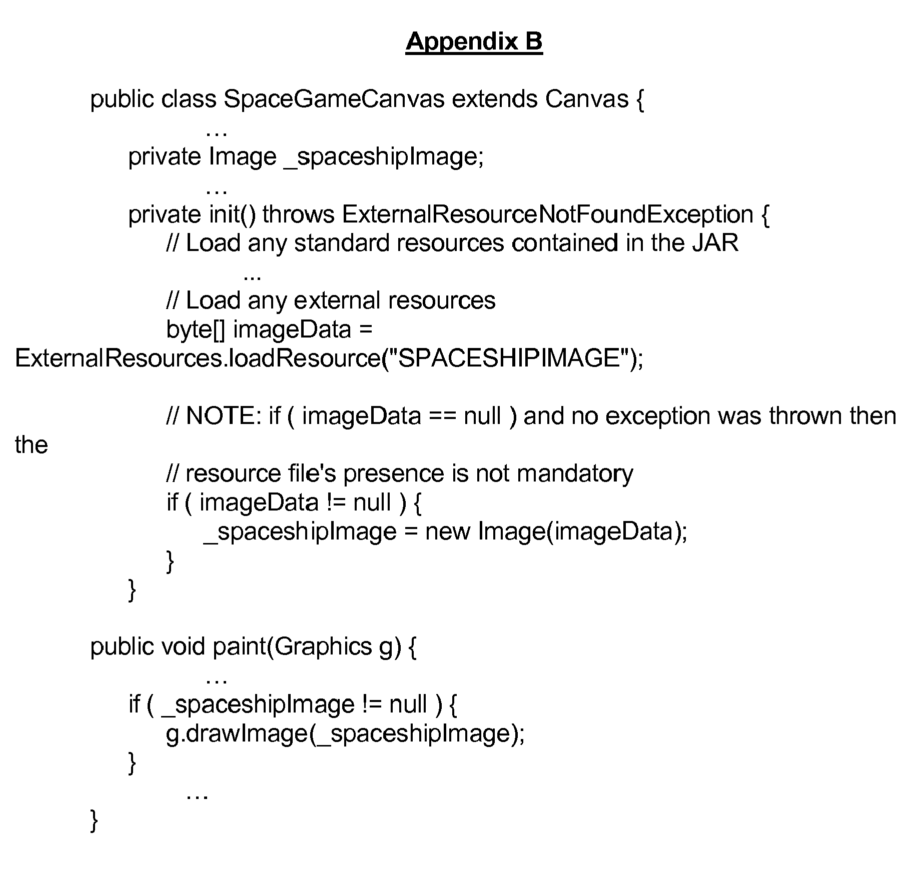

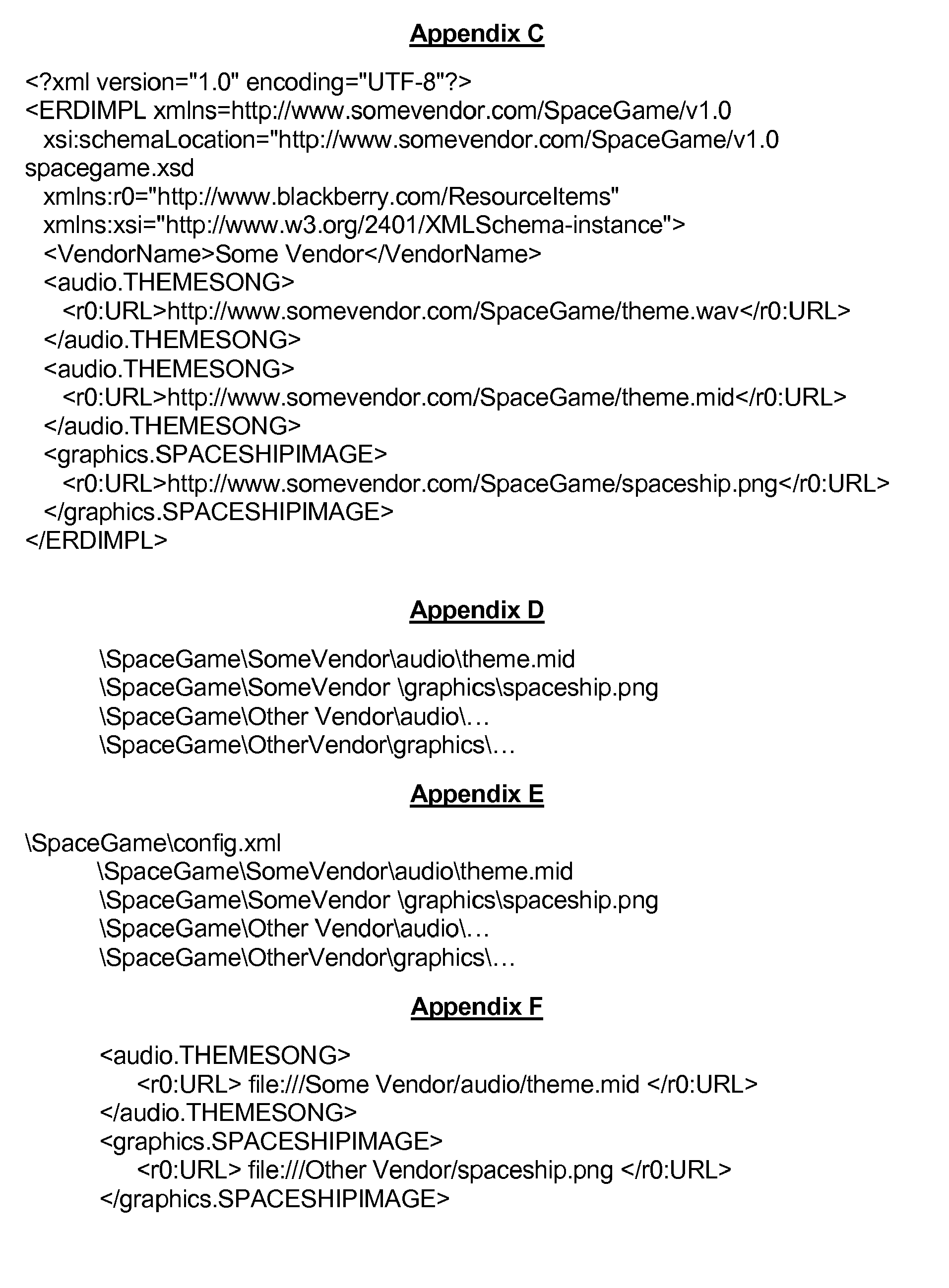

## Claims

1. An electronic document for updating resource files for an application, comprising:
logical names used by said application for referring to said resource files; and
parameters for specifying constraints for said resource files.

2. The electronic document of claim 1, wherein said constraints indicate the type of resource files expected by the application.

3. The electronic document of claim 1 or claim 2, wherein said constraints indicate whether the resource files are required for execution of the application.

4. The electronic document of any one of claims 1 to 3, wherein said resource files are images and wherein said constraints indicate dimensions for said images.

5. The electronic document of any one of claims 1 to 4, wherein said resource files represent audio and wherein said constraints indicate that said audio should be loopable.

6. The electronic document of any one of claims 1 to 5, further comprising:
an application identifier identifying said application.

7. The electronic document of claim 6, wherein said application identifier is a unique universal resource identifier.

8. The electronic document of claim 7, wherein said unique universal resource identifier identifies the version of said application.

9. The electronic document of any one of claims 1 to 8, wherein said application is a mobile application.

10. An electronic document for updating resource files for an application, comprising:
an application identifier identifying an application to which said electronic document corresponds; and
a universal resource identifier identifying a resource file for use with said application.

11. The electronic document of claim 10, further comprising:
a logical name used by said application for referring to said resource file.

12. The electronic document of claim 11, further comprising:
a universal resource identifier identifying an external resource definition for said application, said external resource definition specifying said logical name used by said application.

13. The electronic document of any one of claims 10 to 12, wherein said application identifier is a universal resource identifier.

14. The electronic document of any one of claims 10 to 13, wherein said application is a mobile application.

15. A method for updating resource files for an application on a mobile device, comprising:
receiving a set of identifiers specifying resource files for use with said application;
retrieving said resource files; and
configuring said application to use said retrieved resource files.

16. The method for updating resource files of claim 15, wherein said receiving comprises receiving a document containing said set of identifiers.

17. The method for updating resource files of claim 16, wherein said set of identifiers are universal resource identifiers.

18. The method for updating resource files of any one of claims 15 to 17, further comprising:
receiving a set of constraints for said resource files.

19. The method for updating resource files of claim 18, further comprising:
validating said resource files using said constraints.

20. The method for updating resource files of any one of claims 15 to 19, wherein said configuring comprises updating a configuration file for said application with said retrieved resource files.

21. The method for updating resource files of any one of claims 15 to 20, further comprising:
confirming that a user of said mobile device wishes to retrieve each of said resource files,
wherein said retrieving comprises retrieving said resource files confirmed by said user of said mobile device.

22. A method for updating resource files for an application, comprising:
identifying resource files for use with said application in an electronic document; and
publishing said electronic document.

23. A computer readable medium containing computer-executable instructions that, when performed by a processor of a mobile device, cause said mobile device to implement all of the steps of the method of any one of claims 15 to 22.
